# EUROPÄISCHE PATENTSCHRIFT

(11) **EP 2 913 199 B1**
(45) Veröffentlichungstag und Bekanntmachung des Hinweises auf die Patenterteilung: **21.03.2018**
(21) Anmeldenummer: 14000731.1
(22) Anmeldetag: 28.02.2014
(51) Int. Cl.: B44C 3/02, B44C 5/04, B29C 67/00

(54) **Verfahren und Vorrichtung zum Herstellen eines dekorativen Paneels**
Method and device for manufacturing a decorative panel
Procédé et dispositif de fabrication d'un panneau décoratif

(43) Veröffentlichungstag der Anmeldung: 02.09.2015
(73) Patentinhaber: Flooring Technologies Ltd., Kalkara SCM 1001 (MT)
(72) Erfinder: Hecht, Hendrik, DE - 16816 Buskow (DE); Kalwa, Norbert, DE - 32805 Horn-Bad Meinberg (DE)
(74) Vertreter: Friedrich, Andreas

(56) Entgegenhaltungen:
- EP-A1- 2 363 299
- DE-A1-102008 051 211
- DE-A1-102009 044 802
- DE-A1-102010 036 454
- US-A1- 2005 248 065

## Beschreibung

Die Erfindung betrifft ein Verfahren zum Herstellen eines dekorativen Paneels, insbesondere eines Fußbodenpaneels, mit einem Kern, auf dessen Oberseite wenigstens eine Schicht aufgebracht ist. Die Erfindung betrifft zudem eine Vorrichtung, die bei einem derartigen Verfahren verwendet werden kann.

Dekorative Paneele verfügen über einen Kern, der oftmals aus einer Holzwerkstoffplatte, beispielsweise einer mitteldichten Faserplatte (MDF) oder einer hochdichten Faserplatte (HDF) besteht. Auf der Oberseite und der Unterseite dieses Kernes werden eine oder mehrere Schichten aufgebracht, die unterschiedliche Aufgaben erfüllen können. Auf der Oberseite des Kernes wird ggf. nach einer Grundierung oder anderweitigen Vorbehandlung der Oberseite eine Dekorschicht aufgebracht, die durch eine Nutz- oder Verschleißschicht abgedeckt werden muss, um den Belastungen, denen ein dekoratives Paneel, insbesondere als Fußbodenpaneel, ausgesetzt ist, über einen möglichst langen Zeitraum standzuhalten. Zudem wird eine solche Nutzschicht auch zur Veränderung oder Optimierung der Oberflächeneigenschaften des Paneels verwendet.

Eine Nutzschicht, die insbesondere das Dekor des dekorativen Paneels abdeckt, muss zumindest teilweise transparent ausgebildet sein, damit das Dekor des dekorativen Paneels weiterhin sichtbar ist, wenn es von der Nutzschicht abgedeckt wird. Bei dekorativen Paneelen, insbesondere bei Fußbodenpaneelen, soll oftmals ein hochwertiger Werkstoff, beispielsweise ein Echtholzpaneel, nachgebildet werden. Um den optischen und den haptischen Eindruck der Nachbildung möglichst nah an den Eindruck des Originals zu bringen, ist es aus dem Stand der Technik bekannt, die Nutzschicht mit einer Struktur zu versehen, die insbesondere auf das Dekor, wie beispielsweise eine Holzmaserung abgestimmt ist. Dies ist beispielsweise unter der Bezeichnung "registered embossing" bekannt. Um insbesondere den haptischen Eindruck möglichst perfekt an den des Originalwerkstoffes anpassen zu können, müssen diese Strukturen oftmals relativ tief in die Nutzschicht eingebracht werden.

Aus dem Stand der Technik sind unterschiedliche Nutzschichten, die auch als Schutzschichten bezeichnet werden können, bekannt.

Als Nutzschicht kann beispielsweise ein Overlay-Papier auf der Basis einer mit Kunstharz, beispielsweise Melaminharz, imprägnierten Zelluloselage verwendet werden. Derartige Papiere sind gut verfügbar und vergleichsweise günstig, weisen allerdings den Nachteil auf, dass sie insbesondere für tiefe Strukturen, die in die Oberseite der Nutzschicht eingebracht werden sollen, nicht oder nur bedingt geeignet sind. Die Strukturen werden dabei häufig über Pressbleche in die Oberfläche eingeprägt, so dass für tiefe Strukturen auch ebenso tief strukturierte Pressbleche benötigt werden. Diese müssen aufwändig und kostenintensiv für die unterschiedlichen Dekore und damit auch für unterschiedliche Strukturen separat hergestellt werden. Zudem sind, insbesondere wenn abrasive Additive in der Nutzschicht verwendet werden, die Standzeiten solcher Pressbleche begrenzt, da es zu einem relativ großen Verschleiß der Strukturen kommt. Außerdem werden Pressen, beispielsweise Kurz-taktpressen, benötigt, die teuer in der Anschaffung und aufwändig in der Hand-habung und insbesondere der Umrüstung auf unterschiedliche Strukturen sind.

Alternativ ist aus dem Stand der Technik bekannt, flüssige oder pulverförmige Schichten aus einem Kunstharz, beispielsweise Harnstoff- und/oder Melaminharz, aufzubringen, die jeweils zur Laminierung der Trägerplatte und der auf die Trägerplatte aufgebrachten Beschichtungen unter Einschluss des Dekores, das auf die Trägerplatte aufgebracht ist, in einer Presseinrichtung verpresst werden. Dazu muss ein erhöhter Druck und eine erhöhte Temperatur aufgebracht werden. Auch hier müssen Pressbleche und Pressen verwendet werden, die die bereits beschriebenen Nachteile aufweisen. Hinzu kommt, dass beim Auftragen flüssiger oder pulverförmiger Schichten die in einem Auftrag aufbringbare Schichtdicke begrenzt ist, so dass mehrere solcher Schichten aufeinander aufgetragen werden müssen, um insbesondere Nutzschichten großer Schichtdicke realisieren zu können. Diese sind insbesondere für tief einzubringende Strukturen jedoch nötig. Der apparative und technologische Aufwand sowie der Zeit-und damit der Kostenaufwand sind daher bei dieser Art Nutzschicht besonders hoch.

Eine weitere Möglichkeit besteht darin, flüssige oder pulverförmige Kunststoffe, beispielsweise Acrylate, zum Versiegeln des Dekors auf der Trägerplatte des dekorativen Paneels aufzubringen und diese beispielsweise unter Anwendung energiereicher Strahlung, beispielsweise UV- und/oder Elektronenstrahlung, nachträglich auszuhärten. Auch hierbei müssen mehrere dünne Schichten übereinander aufgetragen werden, um eine Nutzschicht einer großen Schichtdicke zu erreichen. Die bereits beschriebenen Nachteile bestehen auch hier.

Lackaufträge, die ebenfalls als Nutzschicht verwendet werden können, sind vergleichsweise teuer und nur mit großem apparativen Aufwand mit einer Struktur zu versehen. Zudem lassen sich auch hier nur geringe Auftragsmengen je Schicht realisieren, so dass bei Bedarf an tieferen Strukturen, die in die Nutzschicht eingebracht werden sollen, mehrere Lackschichten mit entsprechend hohem apparativen Aufwand aufgebracht werden müssen. Dabei ist zu beachten, dass beispielsweise UV-Lampen zum nachträglichen Aushärten dieser Schichten, nur Schichten einer begrenzten Schichtdicke vollständig aushärten können.

Ist die Schichtdicke der auszuhärtenden Schicht zu groß, kann die energiereiche Strahlung der UV-Lampen insbesondere die tiefer liegenden Anteile dieser Schichten nicht mehr erreichen.

Aus der DE 10 2009 044 802 A1 ist ein Verfahren bekannt, bei dem ein transparenter strahlenhärtbarer Lack durch eine Vielzahl von Düsenöffnungen auf die Oberfläche eines Fußbodenpaneels aufgebracht wird. Durch mehrfaches Aufbringen entsprechender Schichten, die zwischen den jeweiligen Aufbringvorgängen getrocknet beziehungsweise gehärtet werden, entsteht eine Struktur, deren Tiefe eingestellt werden kann.

Aus der DE 10 2008 051 211 A1 und der DE 10 2010 036 454 A1 ist jeweils ein Verfahren bekannt, bei dem Klarlacke oder pulverförmige Stoffe auf die Oberseite eines Paneels aufgebracht werden und anschließend zumindest teilweise aushärten. Dies geschieht in mehreren Schritten, wobei gegebenenfalls unterschiedliche Lacke mit beispielsweise unterschiedlichen Glanzgraden, durch Zugabe von Mattierungshilfen im Lack, verwendet werden können, sodass manche Druckpunkte eine matte Farbgebung haben während andere Druckpunkte glänzend sind. Auch auf diese Weise können Nutzschichten mit tiefen Strukturen auf die Oberseite eines Werkstückes, insbesondere eines Paneels, aufgebracht werden.

Der Erfindung liegt daher die Aufgabe zugrunde, ein Verfahren zum Herstellen eines dekorativen Paneels sowie eine Vorrichtung, die in einem derartigen Verfahren verwendet werden kann, vorzuschlagen, durch die einfach und kostengünstig auch Nutzschichten großer Schichtdicke mit frei wählbaren Strukturen aufgebracht werden können, so dass die vorgenannten Nachteile vermieden werden.

Die Erfindung löst die gestellte Aufgabe durch ein Verfahren zum Herstellen eines dekorativen Paneels, insbesondere eines Fußbodenpaneels, mit einem Kern, auf dessen Oberseite wenigstens eine Schicht aufgebracht ist, wobei bei dem Verfahren auf die wenigstens eine Schicht eine Nutzschicht mittels eines 3D-Druckers aufgebracht wird, wobei der 3D-Drucker wenigstens einen Druckkopf aufweist, der über eine Mehrzahl von Zuleitungen verfügt, von denen eine der Zuführung des Grundmaterials der Nutzschicht und wenigstens eine weitere der Zuführung wenigstens eines Additivs dient, wobei die Nutzschicht eine Struktur aufweist, wobei die Nutzschicht in Form einer Vielzahl von 3D-Druckpunkten auf die wenigstens eine Schicht aufgebracht wird. Dabei enthält zumindest ein Teil der Nutzschicht wenigstens ein Additiv, wobei die Menge und Art des wenigstens einen Additivs für jeden 3D-Druckpunkt einstellbar ist. 3D-Drucker sind aus dem Stand der Technik prinzipiell bekannt, werden jedoch herkömmlicherweise nicht zum Aufbringen von Beschichtungen verwendet. Der große Vorteil des erfindungsgemäßen Verfahrens besteht darin, dass das aufzubringende Material der Nutzschicht bereits strukturiert auf die wenigstens eine Schicht aufgebracht werden kann, so dass keine Pressbleche oder ähnliche Vorrichtungen zum nachträglichen Einbringen der Struktur in die Nutzschicht mehr nötig sind. Hinzukommt, dass der 3D-Drucker besonders einfach, schnell und daher kostengünstig auf ein jeweils anderes Dekor, das eine andere Struktur in der Nutzschicht benötigt, umgestellt werden kann. Die unterschiedlichen Dekore mit den daran angepassten Strukturen oder auch Strukturen, die unabhängig vom Dekor des dekorativen Paneels sind, können beispielsweise in einem elektronischen Datenspeicher hinterlegt werden, auf den der 3D-Drucker bzw. eine elektronische Datenverarbeitungsvorrichtung, die Teil des 3D-Druckers sein kann, zugreifen kann. Ein kompliziertes und aufwändiges Umrüsten von Pressblechen unterschiedlicher Strukturen ist nicht mehr nötig. Genauso wenig müssen aktuell nicht benötigte Pressbleche zwischengelagert werden.

Vorteilhafterweise besteht die Nutzschicht aus einem Kunststoff. Dieser lässt sich besonders einfach mittels eines 3D-Druckers auftragen und kann beispielsweise direkt nach dem Auftragen durch den 3D-Drucker zumindest teilweise ausgehärtet werden. Der 3D-Drucker verfügt dabei über einen 3D-Druckkopf, der in drei voneinander unabhängigen Raumrichtungen verfahrbar ist. Auf diese Weise lässt sich vorzugsweise die Nutzschicht auf die gesamte Oberfläche des herzustellenden Paneels aufbringen, während die Dicke der aufzubringenden Schicht beispielsweise durch ein Verfahren des 3D-Druckkopfes in eine Richtung senkrecht zur Oberfläche, auf die die Nutzschicht aufgebracht werden soll, erreicht wird. Durch verschiedene Schichtdicken der aufgebrachten Nutzschicht wird die gewünschte Struktur erreicht, deren Tiefe nahezu ausschließlich durch den maximalen Verfahrweg des 3D-Druckkopfes in der Richtung senkrecht zu der Oberfläche begrenzt ist.

In einer bevorzugten Ausgestaltung des Verfahrens härtet der Kunststoff zumindest teilweise transparent aus und ist ein Thermoplast, ein Duroplast, ein Hotmelt, beispielsweise auf Polyurethan- und/oder Polyamidbasis, oder ein Pulverlack, beispielsweise auf Acrylat- und/oder Epoxidbasis.

Erfindungsgemäß enthält zumindest ein Teil der aufzubringenden Nutzschicht wenigstens ein Additiv, beispielsweise Korund, Farben und/oder Pigmente, antibakteriell wirkende Substanzen, Glas, insbesondere in Form von Kugeln und/oder Hohlkugeln, und/oder Fasern, wie beispielsweise aus Zellulose, Glas oder Karbon. Als antibakteriell wirkende Substanz kann beispielsweise Silber verwendet werden.

Die Verwendung von Korund, Glaskugeln und/oder Glashohlkugeln zur Verbesserung des Widerstandes der Oberfläche gegen Abrieb ist aus dem Stand der Technik insbesondere bei der Verwendung der Paneele als Fußbodenbelag bekannt. Fasern, die beispielsweise aus Zellulose, Glas oder Karbon bestehen können, werden zur Armierung und/oder zur Ableitung elektrostatischer Aufladungen verwendet. Farben und/oder Pigmente können als zusätzliche optische Gestaltungsoptionen zusätzlich zu dem sich bereits auf der Oberseite des Kerns befindenden Dekors verwendet werden.

Besonders bevorzugt wird das wenigstens eine Additiv inhomogen in der Nutzschicht verteilt. Da die Additive völlig unterschiedliche Aufgabe lösen können und unterschiedliche Eigenschaften aufweisen, sind nicht alle Additive in der gesamten Nutzschicht nötig. So sind beispielsweise Korund und/oder Glaskugeln zur Verbesserung des Widerstandes gegen Abrieb insbesondere nahe der Oberfläche der aufzubringenden Nutzschicht von Interesse, während sie in tiefer liegenden Regionen der Nutzschicht nur bedingt sinnvoll sind. Bei dem bisher aus dem Stand der Technik bekannten Auftragsverfahren, lässt sich eine derartige inhomogene Verteilung der einzelnen Additive nicht kontrolliert erreichen, da ein vorgefertigtes Auftragsmaterial, das alle Additive enthalten muss, die in der Nutzschicht benötigt werden, vollflächig aufgebracht wird. Daher kommt es immer zu einer zumindest im wesentlichen homogenen Verteilung, so dass Additive auch in den Teilen der Nutzschicht vorhanden sind, in denen sie eigentlich nicht benötigt werden. Durch die besondere Ausgestaltung des erfindungsgemäßen Verfahrens können nun anforderungsoptimal die einzelnen Additive verwendet werden. Dadurch wird die Menge der benötigten Additive reduziert, wodurch auch die Herstellungskosten sinken.

Die Reduzierung der verwendeten Additivmengen hat zudem zur Folge, dass das Recycling der auf diese Weise hergestellten dekorativen Paneele nach Gebrauchsende ressourcenschonend wird und zudem Produkteigenschaften erreicht werden können, die bisher als unvereinbar galten.

Erfindungsgemäß wird die Nutzschicht in Form einer Vielzahl von 3D-Druckpunkten auf die wenigstens eine Schicht aufgebracht. Dabei sind die 3D-Druckpunkte vorteilhafterweise äquidistant über die Oberfläche, auf die die Nutzschicht aufgebracht werden soll, verteilt und so eng angeordnet, dass nach dem Aufbringen eine durchgängige Nutzschicht entsteht.

Vorteilhafterweise wird zumindest an vorbestimmten Positionen auf der wenigstens einen Schicht eine vorbestimmte Anzahl von 3D-Druckpunkten übereinander aufgebracht. Dadurch wird beispielsweise erreicht, dass die zum Aufbringen eines 3D-Druckpunktes verwendete Materialmenge des Materials der Nutzschicht konstant gehalten werden kann. Wird an einer Stelle eine dickere Schicht benötigt, werden konstruktiv besonders einfach mehrere der 3D-Druckpunkte übereinander aufgebracht. Alternativ dazu ist es möglich, die jeweils beim Aufbringen eines 3D-Druckpunktes aufgebrachte Materialmenge zu variieren und bei einer größeren benötigten Schichtdicke der Nutzschicht beispielsweise den Druckkopf in einer Richtung senkrecht zur Oberfläche, auf die Nutzschicht aufgebracht werden soll, zu verfahren.

Als besonders vorteilhaft hat sich herausgestellt, wenn erfindungsgemäß das wenigstens eine Additiv für jeden der 3D-Druckpunkte individuell einstellbar ist. Auf diese Weise lassen sich punktgenau und anwendungsoptimiert die jeweiligen Additive den einzelnen Druckpunkten zuordnen. Werden beispielsweise mehrere 3D-Druckpunkte übereinander aufgebracht, wenn eine besonders dicke Nutzschicht benötigt wird, kann auf diese Weise besonders einfach auch die Verteilung der unterschiedlichen Additive in eine Richtung senkrecht zur Oberfläche, auf die die Nutzschicht aufgebracht wird, gesteuert und individuell eingestellt werden. So ist es beispielsweise denkbar, bei einem ersten 3D-Druckpunkt, der an einer bestimmten Stelle auf die Oberfläche aufgebracht wird, einen Farbstoff oder ein Pigment dem Grundmaterial der Nutzschicht beizumischen. Bei einem zweiten und dritten auf die gleiche Stelle aufzubringenden 3D-Druckpunktes werden beispielsweise keine weiteren Additive benötigt, während der letzte aufgebrachte 3D-Druckpunkt, der den obersten Teil der Nutzschicht bildet, mit Korundpartikeln zur Verbesserung des Widerstandes gegen Abrieb versehen wurde. Natürlich sind auch andere Ausgestaltungen, insbesondere andere Anzahlen aufgebrachter 3D-Druckpunkte und andere verwendete Additive möglich.

Die Erfindung löst die gestellte Aufgabe zudem durch eine Vorrichtung zum Aufnehmen eines Halbfabrikates und Aufbringen einer Nutzschicht in einem hier beschriebenen Verfahren, die sich dadurch auszeichnet, dass die Vorrichtung einen Arbeitstisch, wenigstens einen in drei voneinander unabhängigen Raumrichtungen verfahrbaren 3D-Druckkopf zum Aufbringen des Materials der Nutzschicht und wenigstens eine Härteeinrichtung zum zumindest teilweisen Aushärten des Materials aufweist, wobei der Druckkopf eine Mehrzahl von Zuleitungen aufweist, von denen eine der Zuleitung des Grundmaterials der Nutzschicht und wenigstens eine weitere der Zuführung wenigstens eines Additivs dient. Bei dem Halbfabrikat kann es sich beispielsweise um eine bereits beschichtete Holzwerkstoffplatte handeln, auf deren Oberseite beispielsweise bereits ein Dekor gegebenenfalls auf einer vorher aufgebrachten Grundierung oder Beschichtung aufgebracht ist. Natürlich können beispielsweise auch andere plattenförmige Werkstücke aus anderen Materialien, beispielsweise einem Kunststoff- Holz- Verbundmaterial oder einem Kunststoff als Halbfabrikat verwendet werden. Zum Aufnehmen des Halbfabrikates in der Vorrichtung wird das jeweilige Halbfabrikat beispielsweise auf dem Arbeitstisch angeordnet und gegebenenfalls in gewünschtem Umfang fixiert.

Wird eine solche Vorrichtung bei einem hier beschriebenen Verfahren verwendet, wird zunächst der beschichtete Kern auf dem Arbeitstisch der Vorrichtung angeordnet und ggf. fixiert. Der 3D-Druckkopf, der beispielsweise in x-, y- und z-Richtung unabhängig voneinander verfahrbar ist, wird dann verwendet um das Material der Nutzschicht auf die Oberfläche aufzubringen. Dabei kann der 3D-Druckkopf beispielsweise um bis zu 300 mm entlang der x-Achse verfahren werden, was bevorzugter Weise der Breite des dekorativen Paneels entspricht. Die Verfahrbarkeit entlang der y-Achse, die der Länge des Paneels entspricht, kann beispielsweise 1200 mm betragen aber auch länger sein, so dass beispielsweise auch eine Verfahrbarkeit von bis zu 2600 mm erreicht wird. In z-Richtung, die senkrecht zur Oberfläche des Paneels verläuft, ist eine Verfahrbarkeit von beispielsweise 5 mm ausreichend.

Der 3D-Drucker verfügt über eine elektronische Datenverarbeitungseinrichtung, die beispielsweise Zugriff auf einen elektronischen Datenspeicher hat, in dem die Daten, die die aufzubringende Nutzschicht charakterisieren, gespeichert sind. Diese Daten können beispielsweise die Auftragsmenge eines die Nutzschicht bildenden Materials je 3D-Druckpunkt oder die Schichtdicke enthalten, wobei diese insbesondere durch ein Verfahren in Richtung der z-Achse umgesetzt beziehungsweise erreicht werden kann. Zudem können Informationen über die Positionen, an denen 3D-Druckpunkte gesetzt werden sollen, enthalten sein. So ist es beispielsweise auch denkbar, kein vorgefertigtes Raster von 3D-Druckpunkten zu verwenden, die insbesondere äquidistant über die gesamte Oberfläche, auf der die Nutzschicht aufgebracht werden soll, verteilt sind. Vielmehr ist es auch möglich, einige separate 3D-Druckpunkte anhand ihrer Position zu charakterisieren und diese Positionen im elektronischen Datenspeicher zu hinterlegen. Zusätzliche Informationen können beispielsweise die Zu-fuhr eines oder mehrerer Additive betreffen, die in dem jeweiligen 3D-Druck-punkt bzw. an der gerade gewählten Position des 3D-Druckkopfes Teil der Nutzschicht werden sollen und somit mit aufgebracht werden müssen. Beispielsweise kann auch der Grad der Fixierung in den elektronischen Daten enthalten sein, womit der Grad der Aushärtung des aufgebrachten Materials gemeint ist. Oftmals kann es sinnvoll sein, ein aufgebrachtes Material nicht vollständig aushärten zu lassen, um beispielsweise das Aufbringen weiterer 3D-Druckpunkte an der gleichen Stelle zu vereinfachen. Natürlich kann auch eine vollständige Aushärtung vorgesehen sein.

Erfindungsgemäß verfügt die Nutzschicht über eine Struktur, die durch den 3D-Drucker auf die wenigstens eine Schicht aufgebracht wird. Diese Struktur ist vorteilhafterweise auf das darunterliegende Dekor abgestimmt, das Teil der wenigstens einen Schicht ist, die bereits auf die Oberseite des Kern des Paneels aufgebracht wurde. Wird nun folglich bei der Herstellung der dekorativen Paneele von einem Dekor auf ein anderes Dekor umgestellt, ist es nicht mehr nötig, ein separates Pressblech herzustellen bzw. zu verwenden und eine komplizierte und zeitaufwendige Umrüstung einer Presse vorzunehmen. Vielmehr muss lediglich ein anderer Datensatz aus dem elektronischen Datenspeicher eingelesen bzw. verwendet werden, durch den der 3D-Druckkopf nun auf das neue Dekor angepasst angesteuert wird.

Vorteilhafterweise verfügt die Vorrichtung über wenigstens eine Auftragseinrichtung zum Auftragen wenigstens eines Additives, wobei die Auftragseinrichtung Teil des 3D-Druckkopfes ist. So verfügt der 3D-Druckkopf über eine Mehrzahl von Zuleitungen, wobei eine Zuleitung dem Basismaterial bzw. dem Grundmaterial der Nutzschicht vorbehalten bleibt. Durch diese Zuleitung wird das Material der Nutzschicht aus einem Reservoir zum 3D-Druckkopf geleitet. Je nach Anzahl der verwendeten Additive können auch eine Mehrzahl von zusätzlichen Zuleitungen am Druckkopf vorhanden sein, durch die die unterschiedlichen Additive beigemengt werden können. Das Vermischen bzw. Einbringen der Additive in das Material der Nutzschicht erfolgt in diesem Fall vorteilhafterweise innerhalb des 3D-Druckkopfes.

Vorteilhafterweise verfügt die Vorrichtung daher über wenigstens zwei Auftragseinrichtungen zum Auftragen unterschiedlicher Additive. Alternativ zu der hier beschriebenen Vermischung der unterschiedlichen Elemente der aufzubringenden Nutzschicht innerhalb des Druckkopfes können auch mehrere separate Druckköpfe vorgesehen sein, durch die beispielsweise die Additive in einen bereits aufgebrachten 3D-Druckpunkt, der bis zu diesem Zeitpunkt zumindest nahezu ausschließlich aus dem Grundmaterial der Nutzschicht besteht, eingebracht werden.

Vorteilhafterweise ist die Härteeinrichtung eine 3D-Punkt-Härteeinrichtung zum zumindest teilweisen Aushärten eines aufgebrachten 3D-Punktes. Auf diese Weise ist es möglich, einzelne aufgebrachte 3D-Druckpunkte individuell bis zu einem gewünschten Grad aushärten zu lassen, wobei die Information darüber in dem elektronischen Datenspeicher enthalten sein kann. Alternativ oder zusätzlich dazu verfügt die Härteeinrichtung über eine Endaushärteeinrichtung zum vollständigen Aushärten der aufgebrachten Nutzschicht. Damit ist es möglich, die vollständige Nutzschicht vollständig auszuhärten, und so fertig zu stellen.

Mit Hilfe der beigefügten Figuren wird nachfolgend ein Ausführungsbeispiel der vorliegenden Erfindung näher erläutert. Es zeigt:
- Figur 1: - eine schematische Draufsicht auf eine Vorrichtung gemäß einem ersten Ausführungsbeispiel der vorliegenden Erfindung,
- Figur 2: - eine schematische Seitenansicht der Vorrichtung aus Figur 1,
- Figur 3: - eine schematische Teilvergrößerung eines Ausschnittes aus Figur 2 und
- Figur 4: - eine schematische Vergrößerung eines Ausschnittes aus Figur 3.

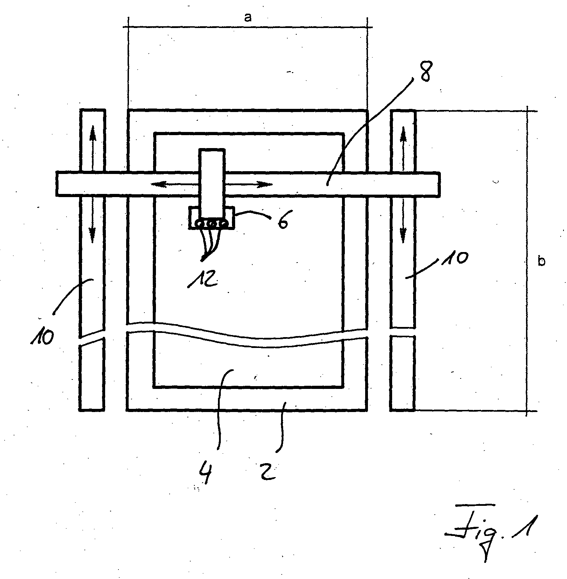

Figur 1 zeigt eine schematische Draufsicht auf eine Vorrichtung gemäß einem ersten Ausführungsbeispiel der vorliegenden Erfindung. Man erkennt einen Arbeitstisch 2, auf dem das herzustellende Paneel 4 angeordnet ist. Die Vorrichtung verfügt über einen 3D-Druckkopf 6, der entlang einer ersten Schiene 8 entlang einer x-Achse verfahrbar ist. Der maximale Verfahrweg a beträgt im gezeigten Ausführungsbeispiel 300 mm.

Die erste Schiene 8 ist auf einem zweiten Schienenpaar 10 gelagert und entlang dieses zweiten Schienenpaares 10 entlang der y-Achse verschiebbar. In dieser Richtung beträgt der maximale Verfahrweg b 1200 mm im gezeigten Ausführungsbeispiel. Man erkennt am 3D-Druckkopf drei schematisch angedeutete Auftragseinrichtungen 12, durch die einerseits das Grundmaterial der aufzubringenden Nutzschicht als auch eines oder mehrere der verwendeten Additive aufgetragen werden können.

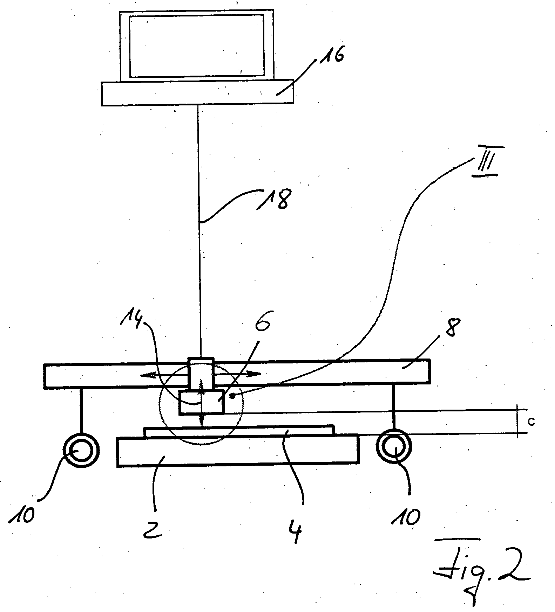

Figur 2 zeigt eine Seitenansicht durch die Vorrichtung aus Figur 1. Man erkennt die erste Schiene 8, das zweite Schienenpaar 10 sowie den 3D-Druckkopf 6. Dieser ist auch in Figur 2 oberhalb des Arbeitstisches 2 mit dem sich darauf befindenden Paneel 4 angeordnet. Wie bereits dargelegt, ist der 3D-Druckkopf 6 entlang der ersten Schiene 8 in Richtung der x-Achse verschiebbar. Man erkennt in Figur 2 zudem, dass der 3D-Druckkopf 6 entlang des Doppelpfeiles 14 verschiebbar ist. Dies entspricht einer Verschiebung in z-Richtung senkrecht zu der Oberfläche des Paneels 4, auf die die Nutzschicht aufzubringen ist. Der maximale Verfahrweg c beträgt in dieser Richtung im gezeigten Ausführungsbeispiel 10 mm.

In Figur 2 ist zudem ein Computer 16 dargestellt, der über eine Datenleitung 18 mit dem 3D-Druckkopf 6 verbunden ist. In dem Computer 16 befindet sich eine elektronische Datenspeichereinrichtung, in der sämtliche Daten über die auszubringende Nutzschicht enthalten sind.

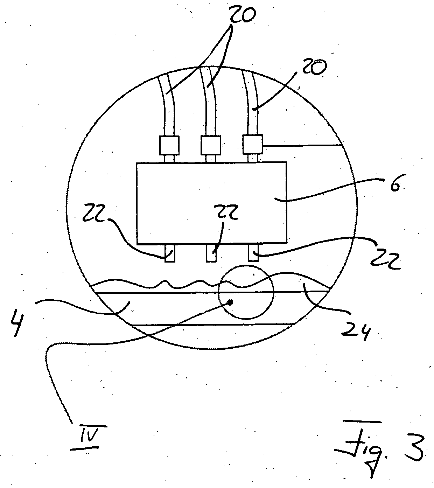

Figur 3 ist eine vergrößerte Darstellung des Kreises aus Figur 2. Man erkennt den 3D-Druckkopf 6, der über drei Materialzuführungen 20 verfügt, durch die das Grundmaterial der aufzubringenden Nutzschicht sowie im gezeigten Ausführungsbeispiel zwei unterschiedliche Additive zugeführt werden können. Natürlich sind auch 3D-Druckköpfe 6 mit mehr oder weniger Materialzuführungen 20 denkbar. An der gegenüberliegenden Seite des 3D-Druckkopfes 6 befinden sich Auftragsdüsen 22, die im gezeigten Ausführungsbeispiel mit den Materialzuführungen 20 korrespondieren, so dass die durch die Materialzuführungen 20 zugeführten Materialien über die jeweiligen Auftragsdüsen 22 aufgebracht werden können. Alternativ dazu ist es auch möglich, dass die drei oder mehreren Materialzuführungen 20 im Inneren des 3D-Druckkopfes 6 zusammenlaufen und die verwendeten Materialien dort vermischt werden, so dass nur eine Auftragsdüse 22 vorhanden ist.

Unterhalb des 3D-Druckkopfes 6 ist in Figur 3 das Paneel 4 mit der darauf aufgebrachten Nutzschicht 24 dargestellt. Die Nutzschicht 24 verfügt über eine Struktur, die sich in deutlich unterschiedlichen Dicken der Nutzschicht 24 niederschlägt. Dies ist durch den verwendeten 3D-Drucker besonders einfach erreichbar.

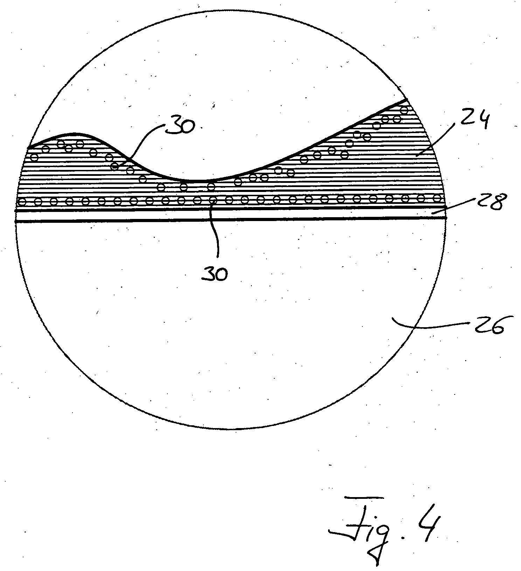

Figur 4 zeigt eine vergrößerte Darstellung des Kreises aus Figur 3. Man erkennt hier einen Kern 26 des Paneels 4 mit auf seiner Oberfläche aufgebrachter Dekorschicht 28, die gemeinsam in Figur 3 noch "Paneel 4" genannt wurden. Auf der Dekorschicht 28 ist die Nutzschicht 24 positioniert, die durch den 3D-Druckkopf 6 aufgebracht wurde. Man erkennt, dass die Nutzschicht 24 über Additive 30 verfügt, die in zwei voneinander getrennten Bereichen, nämlich einmal am unteren Ende der Nutzschicht 24 und einmal im oberen Bereich der Nutzschicht 24 angeordnet sind. Diese in Figur 4 nur schematisch dargestellten Additive können unterschiedliche Materialien sein, die unterschiedliche Aufgaben erfüllen. Durch den verwendeten 3D-Druck können sie beispielsweise horizontal gleich verteilt, wie im unteren Bereich der Nutzschicht 24 oder horizontal ungleich verteilt, wie im oberen Teil der Nutzschicht 24 angeordnet werden.

### Bezugszeichenliste

- 2: Arbeitstisch
- 4: Paneel
- 6: 3D-Druckkopf
- 8: Erste Schiene
- 10: Zweites Schienenpaar

- 12: Auftragseinrichtung
- 14: Doppelpfeil
- 16: Computer
- 18: Datenleitung
- 20: Materialzuführung

- 22: Auftragsdüsen
- 24: Nutzschicht
- 26: Kern
- 28: Dekorschicht
- 30: Additiv

## Patentansprüche

1. Verfahren zum Herstellen eines dekorativen Paneels (4), insbesondere eines Fußbodenpaneels, mit einem Kern (26), auf dessen Oberseite wenigstens eine Schicht aufgebracht ist, wobei bei dem Verfahren auf die wenigstens eine Schicht eine Nutzschicht (24) mittels eines 3D-Druckers aufgebracht wird, wobei der 3D-Drucker wenigstens einen Druckkopf aufweist, der über eine Mehrzahl von Zuleitungen verfügt, von denen eine der Zuführung des Grundmaterials der Nutzschicht (24) und wenigstens eine weitere der Zuführung wenigstens eines Additivs dient, wobei die Nutzschicht (24) eine Struktur aufweist, wobei die Nutzschicht (24) in Form einer Vielzahl von 3D-Druckpunkten auf die wenigstens eine Schicht aufgebracht wird, wobei zumindest ein Teil der Nutzschicht (24) das wenigstens eine Additiv (30) enthält, wobei Menge und Art des wenigstens einen Additivs (30) für jeden 3D-Druckpunkt einstellbar ist.

2. Verfahren nach Anspruch 1, **dadurch gekennzeichnet, dass** die Nutzschicht (24) aus einem Kunststoff besteht.

3. Verfahren nach Anspruch 2, **dadurch gekennzeichnet, dass** der Kunststoff zumindest teilweise transparent aushärtet und ein Thermoplast, ein Duroplast, ein Hotmelt, beispielsweise auf Polyurethan- und/oder auf Polyamidbasis oder ein Pulverlack, beispielsweise auf Acrylat- und/oder Epoxidbasis, ist.

4. Verfahren nach einem der vorstehenden Ansprüche, **dadurch gekennzeichnet, dass** als Additiv Korund, Farben und/oder Pigmente, antibakteriell wirkende Substanzen, Glas, insbesondere in Form von Kugeln und/oder Hohlkugeln, und/oder Fasern, beispielsweise aus Zellulose, Glas oder Karbon verwendet werden, wobei als antibakteriell wirkende Substanz beispielsweise Silber verwendet wird.

5. Verfahren nach einem der vorstehenden Ansprüche, **dadurch gekennzeichnet, dass** das wenigstens eine Additiv (30) inhomogen in der Nutzschicht (24) verteilt wird.

6. Verfahren nach einem der vorstehenden Ansprüche, **dadurch gekennzeichnet, dass** zumindest an vorbestimmten Positionen auf der wenigstens einen Schicht eine vorbestimmte Anzahl von 3D-Druckpunkten übereinander aufgebracht wird.

7. Vorrichtung zum Aufnehmen eines Halbfabrikates und Aufbringen einer Nutzschicht (24) in einem Verfahren nach einem der vorstehenden Ansprüche, wobei die Vorrichtung
- einen Arbeitstisch (2),
- wenigstens einen in drei voneinander unabhängigen Raumrichtungen verfahrbaren 3D-Druckkopf (6) zum Aufbringen des Materials der Nutzschicht (24), der eine Mehrzahl von Zuleitungen aufweist, von denen eine der Zuleitung des Grundmaterials der Nutzschicht (24) und wenigstens eine weitere der Zuführung des wenigstens einen Additivs (30) dient, und
- wenigstens eine Härteeinrichtung zum zumindest teilweisen Aushärten des Materials aufweist und
- eingerichtet ist, die Nutzschicht (24) in Form einer Vielzahl von 3D-Druckpunkten auf die wenigstens eine Schicht aufzubringen, wobei Menge und Art des wenigstens einen Additivs (30) für jeden 3D-Druckpunkt einstellbar ist.

8. Vorrichtung nach Anspruch 7, **dadurch gekennzeichnet, dass** die Vorrichtung eingerichtet ist, , wobei für jeden 3D-Druckpunkt eine Auftragsmenge des Materials der Nutzschicht (24) und/oder ein Grad der Aushärtung des Materials der Nutzschicht (24) einstellbar ist.

9. Vorrichtung nach Anspruch 7 oder 8, **dadurch gekennzeichnet, dass** die Vorrichtung wenigstens eine Auftragseinrichtung (12, 22) zum Auftragen wenigstens eines Additivs (30) aufweist, wobei die Auftragseinrichtung (12, 22) Teil des 3D-Druckkopfes (6) ist.

10. Vorrichtung nach Anspruch 9, **dadurch gekennzeichnet, dass** der Druckkopf wenigstens zwei Auftragseinrichtungen (12, 22) zum Auftragen unterschiedlicher Additive (30) aufweist.

11. Vorrichtung nach Anspruch 7 bis 10, **dadurch gekennzeichnet, dass** die Härteeinrichtung eine 3D-Punkt-Härteeinrichtung zum zumindest teilweisen Aushärten eines aufgebrachten 3D-Druckpunktes aufweist.

12. Vorrichtung nach Anspruch 7 bis 11, **dadurch gekennzeichnet, dass** die Härteeinrichtung eine Endaushärteeinrichtung zum vollständigen Aushärten der aufgebrachten Nutzschicht (24) aufweist.

## Claims

1. A process for the manufacture of a decorative panel (4), in particular a floor panel, with a core (26), on whose upper surface at least one layer is applied, wherein during the process one wear layer (24) is applied on the at least one layer by means of a 3D printer, wherein the 3D printer has at least one print head, which has a plurality of supply lines, of which one is for the supply of the wear layer (24) base material and at least one other is for the supply of at least one additive, wherein the wear layer (24) has a structure, wherein the wear layer (24) is applied on the at least one layer in the form of a plurality of 3D print dots, wherein at least one part of the wear layer (24) contains the at least one additive (30), wherein the quantity and type of the at least one additive (30) can be set for each 3D print dot.

2. The process according to claim 1, **characterized in that** the wear layer (24) consists of a plastic.

3. The process according to claim 2, **characterized in that** the plastic at least partially cures transparently and is a thermoplastic, a thermoset, a hotmelt, for example on a polyurethane and/or on a polyamide basis or a powder coating, for example on acrylate and/or epoxy basis.

4. The process according to any one of the preceding claims, **characterized in that** corundum, paints and/or pigments, antibacterial substances, glass, in particular in the form of spheres and/or hollow spheres, and/or fibres, for example produced from cellulose, glass or carbon are used as an additive, wherein the antibacterial substance used, for example, is silver.

5. The process according to any one of the preceding claims, **characterized in that** the at least one additive (30) is inhomogeneously distributed in the wear layer (24).

6. The process according to any one of the preceding claims, **characterized in that** at least at predetermined positions on the at least one layer a predetermined number of 3D print dots is applied one on top of the other.

7. A device for holding a semi-finished product and applying a wear layer (24) in a process in accordance with any one of the preceding claims, wherein the device
- has a work table (2),
- has at least one 3D print head (6) that can be moved in three independent spatial directions to apply the wear layer (24) material, which print head has a plurality of supply lines, of which one is for the supply of the wear layer (24) base material and at least one other is for the supply of the at least one additive (30), and
- has at least one curing unit for at least partial curing of the material and
- is configured to apply the wear layer (24) in the form of a plurality of 3D print dots on the at least one layer, wherein the quantity and type of the at least one additive (30) can be set for each 3D print dot.

8. The device according to claim 7, **characterized in that** the device is configured, wherein for each 3D print dot an application quantity of the wear layer (24) material and/or a degree of curing of the wear layer (24) material can be set.

9. The device according to claim 7 or 8, **characterized in that** the device has at least one applicator (12, 22) to apply at least one additive (30), wherein the applicator (12, 22) is part of the 3D print head (6).

10. The device according to claim 9, **characterized in that** the print head has at least two applicators (12, 22) to apply different additives (30).

11. The device according to claim 7 to 10, **characterized in that** the curing unit has a 3D dot curing unit for at least partial curing of an applied 3D print dot.

12. The device according to claim 7 to 11, **characterized in that** the curing unit has a final curing unit for complete curing of the applied wear layer (24).

## Revendications

1. Procédé de fabrication d'un panneau décoratif (4), en particulier d'un panneau de plancher, comportant un coeur (26) sur la face supérieure duquel est déposée au moins une couche, procédé dans lequel une couche utilitaire (24) est déposée au moyen d'une imprimante 3D sur ladite au moins une couche,
dans lequel
l'imprimante 3D comprend au moins une tête d'impression qui dispose d'une pluralité de conduites d'alimentation dont l'une sert à l'alimentation en matériau de base de la couche utilitaire (24) et au moins une autre sert à l'alimentation d'au moins un additif,
la couche utilitaire (24) présente une structure,
la couche utilitaire (24) est déposée sous la forme d'une multitude de points d'impression 3D sur ladite au moins une couche,
une partie au moins de la couche utilitaire (24) contient ledit au moins un additif (30), et
la quantité et le type dudit au moins un additif (30) sont réglables pour chaque point d'impression 3D.

2. Procédé selon la revendication 1,
**caractérisé en ce que**
la couche utilitaire (24) est constituée en matière plastique.

3. Procédé selon la revendication 2,
**caractérisé en ce que**
la matière plastique est durcie de façon au moins partiellement transparente et est une matière thermoplastique, une matière thermodurcissable, un thermofusible, par exemple à base de polyuréthane et/ou de polyamide, ou un vernis en poudre, par exemple à base d'acrylate et/ou d'époxy.

4. Procédé selon l'une des revendications précédentes,
**caractérisé en ce que**
l'on utilise à titre d'additif un corindon, des colorants et/ou des pigments, des substances à effet antibactérien, du verre, en particulier sous la forme de billes et/ou de billes creuses, et/ou des fibres, par exemple en cellulose, en verre ou en carbone, et à titre de substance à effet antibactérien on utilise par exemple de l'argent.

5. Procédé selon l'une des revendications précédentes,
**caractérisé en ce que**
ledit au moins un additif (30) est réparti de façon inhomogène dans la couche utilitaire (24).

6. Procédé selon l'une des revendications précédentes,
**caractérisé en ce que**
au moins à des positions prédéterminées, un nombre prédéterminé de points d'impression 3D sont déposés les uns au-dessus des autres sur ladite au moins une couche.

7. Dispositif pour recevoir un demi-produit et pour déposer une couche utilitaire (24) dans un procédé selon l'une des revendications précédentes, le dispositif comprenant
- une table de travail (2),
- au moins une tête d'impression 3D (6) mobile dans trois directions indépendantes dans l'espace pour déposer le matériau de la couche utilitaire (24), ladite tête comprenant une pluralité de conduites d'alimentation dont l'une sert à l'alimentation en matériau de base de la couche utilitaire (24) et au moins une autre sert à l'alimentation dudit au moins un additif (30), et
- au moins un moyen de durcissement pour faire durcir au moins partiellement le matériau, et
étant conçu pour déposer la couche utilitaire (24) sous la forme d'une multitude de points d'impression 3D sur ladite au moins une couche,
la quantité et le type dudit au moins un additif (30) étant réglables pour chaque point d'impression 3D.

8. Dispositif selon la revendication 7,
**caractérisé en ce que**
le dispositif est conçu de manière à permettre de régler une quantité de dépôt du matériau de la couche utilitaire (24) et/ou un degré de durcissement du matériau de la couche utilitaire (24), pour chaque point d'impression 3D.

9. Dispositif selon la revendication 7 ou 8,
**caractérisé en ce que**
le dispositif comprend au moins un moyen de dépôt (12, 22) pour déposer au moins un additif (30), le moyen de dépôt (12, 22) faisant partie de la tête d'impression 3D (6).

10. Dispositif selon la revendication 9,
**caractérisé en ce que**
la tête d'impression comprend au moins deux moyens de dépôt (12, 22) pour déposer différents additifs (30).

11. Dispositif selon la revendication 7 à 10,
**caractérisé en ce que**
le moyen de durcissement comprend un moyen de durcissement de point 3D pour faire durcir au moins partiellement un point d'impression 3D déposé.

12. Dispositif selon la revendication 7 à 11,
**caractérisé en ce que**
le moyen de durcissement comprend un moyen de durcissement de finition pour faire durcir complètement la couche utilitaire (24) déposée.
